# EUROPÄISCHE PATENTANMELDUNG

(11) **EP 1 264 682 A1**
(43) Veröffentlichungstag der Anmeldung: **11.12.2002**
(21) Anmeldenummer: 02010516.9
(22) Anmeldetag: 10.05.2002
(51) Int. Cl.: B32B 5/08, B60J 11/00

(54) **Verbundmaterial zum Schock-und Abriebschutz von Kunststoff-und Metalloberflächen**

(30) Priorität: 06.06.2001 DE 10127312
(71) Anmelder: Nordenia Deutschland Gronau GmbH, 48599 Gronau (DE)
(72) Erfinder: Hamulski, Markus, 48599 Gronau-Epe (DE)
(74) Vertreter: Honke, Manfred, Dr.-Ing.

(57) **Zusammenfassung**

Bahnförmiges Verbundmaterial zum Schützen von zwei- und/oder dreidimensionalen Gebilden gegen Schock und Abrieb, welches aus aus wenigstens zwei miteinander verbundenen Schichten,nämlich einer flexiblen Trägerfolie aus Kunststoff undeiner außen auf diese Trägerfolie aufkaschierten, im wesentlichen ganzflächig mit dieser verbundenen Schicht aus einer textilen, verformbaren Maschenware besteht.

## Beschreibung

Die Erfindung betrifft ein bahnförmiges Verbundmaterial aus wenigstens zwei miteinander verbundenen Schichten, das zum Schützen gegen Schock und Abrieb von zwei- und/oder dreidimensionalen Gebilden dient, z.B. als Transportschutz von lackierten Automobilteilen, wie insbesondere Stoßfängern, die mechanisch stark beansprucht werden.

Die Lackierung von Automobilkunststoffteilen wie Stoßfängern oder Rückspiegelschalen in der Wagenfarbe gehört heutzutage zum Standard bei der zeitgemäßen optischen Gestaltung moderner Kraftfahrzeuge. Diese Teile sind jedoch sehr empfindlich gegen Zerkratzen. Gerade Stoßfänger und Rückspiegel sind exponierte Teile des Autos, die sehr leicht touchiert werden können.

Man hat daher in den letzten Jahren versucht, die bei frisch lackierten Blechteilen mit Erfolg angewendete Methode des Maskierens mit speziellen lackverträglichen Transportschutzfolien, wie sie zum Beispiel in DE 195 32 220 A1 oder in EP 0 827 526 A1 beschrieben sind, auf Stoßfänger zu übertragen.

Dieses erwies sich bei Stoßfängern als problematisch, da diese beim Rangieren der Automobile den häufig auftretenden starken Beanspruchungen durch Entlangschrammen und leichte Kollisionen nicht gewachsen sind und keine ausreichende Schutzwirkung vermitteln.

Aufgabe der Erfindung ist es, ein bahnförmiges Verbundmaterial anzugeben, das einerseits gut anschmiegsam an gewölbte Oberflächen, andererseits flüssigkeitsdicht gegen Wasser und Kraftfahrzeugbetriebsmittel, wie Benzin, Diesel, Bremsflüssigkeit, ist und bei einer hohen Abriebbeständigkeit eine hervorragende mechanische Schutzwirkung mit einer ausgezeichneten Lackverträglichkeit verbindet, wobei auch unter extremen Bedingungen keine Beschädigung eintritt.

Gelöst wird die vorgenannte Aufgabe durch ein bahnförmiges Verbundmaterial, wie es im Hauptanspruch niedergelegt ist.

Gegenstand der Unteransprüche sind dabei vorteilhafte Weiterentwicklungen sowie wenigstens eine Verwendungsmöglichkeit.

Als zwei- oder dreidimensionale Gegenstände sollen insbesondere solche mit lackierten Oberflächen bei Kraftfahrzeugen, Möbeln, Elektroartikeln, Geräten der Unterhaltungselektronik, Computer und dergleichen verstanden sein, mit denen das Verbundmaterial adhäsiv, gegebenenfalls elektrostatisch, verbunden sein kann; er soll sich auch zum Umwickeln eignen.

In einer bevorzugten Ausführungsform besteht das Verbundmaterial aus einer UV-stabilisierten polyolefinischen, ungereckten Folie als Trägermaterial, wobei diese Trägerfolie einen Zug-Elastizitätsmodul von weniger als 300 N/mm², vorzugsweise weniger als 150 N/mm², und eine Dicke von 10 bis 150 µm, bevorzugt 40 bis 100 µm, aufweist.

Die Trägerfolie ist oberseitig kaschiert mit einer Maschenware, die vorteilhaft ein Flächengewicht von 10 bis 200 g/m² aufweist, bevorzugt von 20 bis 80g/m².

Geeignete Materialien für die Trägerfolie sind prinzipiell alle polymeren Stoffe, aus denen sich Folien mit einem niedrigen Elastizitätsmodul herstellen lassen, wie Polyolefine, Polyurethane oder Weich-PVC.

Bevorzugt einsetzbar sind Polyolefine geringer Dichte, mit denen der erfindungsgemäße, relativ kleine Elastizitätsmodul erzielbar ist. Dafür kommen verschiedenste Copolymere von Ethylen mit α-Olefinen, wie typischerweise Propylen, 1-Buten, 1-Hexen oder 1-Octen (vorwiegend LLDPE, VLDPE, ULDPE), aber auch Ethylen-Styrol-Copolymere sowie Copolymere des Propylens mit Ethylen und α-Olefinen in Betracht, so auch EPDM und EPM-Kautschuke. Ebenfalls gut geeignet sind gesättigte synthetische Kautschuke wie Polyethylenvinylacetat (EVM), hydrierte Nitrilkautschuke sowie styrolhaltige synthetische Kautschuke wie SEBS und SEPS, da diese im Gegensatz zu den ungesättigten Varianten, eingeschlossen Naturkautschuk, eine gute Witterungsbeständigkeit aufweisen. Ferner können halogenhaltige Polymere wie chloriertes Polyethylen oder Chloropren Verwendung finden. Bevorzugt werden Mischungen verschiedener geeigneter Polyolefine verwendet, um die mechanischen und thermischen Eigenschaften sowie Verarbeitbarkeit und weitere Anwendungsparameter optimal einstellen zu können.

Um die Weichheit eines geeigneten Materials und die Dämpfung gegen Stoßbelastungen weiter zu steigern, kann die Folie auch zusätzlich geschäumt werden.

Um der Trägerfolie die geforderte Witterungsstabilität zu geben, ist der Zusatz von Lichtschutzmitteln zu bevorzugen. Ihre Funktion besteht vorrangig in der Vermeidung der Versprödung der Trägerfläche. Derartige Lichtschutzmittel sind bei Gaechter und Müller, Taschenbuch der Kunststoff-Additive, München 1979, bei Kirk-Othmer (3.) 23, 615 - 627, bei Encyl. Polym. Sci. Technol. 14, 125 - 148 und bei Ullmann (4.) 8, 21; 15, 529, 676 beschrieben. Insbesondere HALS-Lichtschutzmittel sind für die erfindungsgemäße Schutzfolie geeignet.

Die Menge des Lichtschutzmittels sollte mindestens 0,15 Gew.-%, vorzugsweise mindestens 0,30 Gew.-% bezogen auf die Trägerfolie betragen. Eine zusätzliche Verbesserung der Lichtstabilität der Trägerfolie ist auch durch Zusatz von Titandioxid möglich. Vorteilhaft bezüglich der mechanischen Eigenschaften und der Homogenität des Weißgrades sind 5 bis 15 Gew.-% Titandioxidzusatz. Vorzugsweise liegt die UV-Durchlässigkeit der Schutzfolie im Bereich von 290 bis 300 nm durch das Zusammenwirken von Lichtschutzmitteln und Pigmenten unter ca. 1%, vorzugsweise unter ca. 0,1%.

Aus optischen Gründen kann die Folie auch farbig pigmentiert sein.

Bei lackierten Kunststoffteilen mit einem hohen Restlösungsmittelgehalt im Lack, etwa bedingt durch niedrige Trockentemperaturen, kann es vorteilhaft sein, die Basisfolie zum Zweck einer besseren Gasdurchlässigkeit zu perforieren.

Aus Gründen der besseren Verarbeitbarkeit, besonders beim Blasfolienverfahren, kann der Zusatz von Antiblockmitteln, zum Beispiel Kreide oder Talkum, vorteilhaft sein. Eine solche Folie kann aber auch im Flachfolienextrusionsverfahren oder durch Kalandrieren hergestellt ist. Die Folie selbst kann also aus mehreren einzelnen Schichten aufgebaut sein.

Maschenwaren sind textile Flächengebilde, hergestellt aus einem oder mehreren Fäden oder Fadensystemen durch Maschenbildung (Fadenschleifen), im Unterschied zu Webwaren (Geweben), bei der die Fläche durch Verkreuzen von zwei Fadensystemen (Kett- und Schußfäden) hergestellt wird und den Vliesen (Faserverbundstoffen), bei denen ein loser Faserflor durch Wärme, Nadelung, Nähen oder durch Wasserstrahlen verfestigt wird. Bei den Maschenwaren handelt es sich um Kulier-, Strick- oder Wirkware.

Maschenwaren lassen sich in Gestricke, bei denen die Fäden in Querrichtung durch das Textil laufen, und in Gewirke einteilen, bei denen die Fäden längs durch das Textil laufen. Maschenwaren sind durch ihre Maschenstruktur prinzipiell nachgiebige, anschmiegsame Textilien, weil sich die Maschen in Länge und Breite dehnen können und das Bestreben haben, in ihre Ausgangslage zurückzukehren. Sie sind bei hochwertigem Material sehr strapazierfähig.

Die Maschenware hat vorzugsweise ein Flächengewicht von 10 bis 200 g/m², besonders bevorzugt von 20 bis 80 g/m², um eine gute Flexibilität auch im Verbund mit der Blasfolie zu gewährleisten. Am geeignetsten sind Typen, die besonders abriebfest und widerstandsfähig gegen Stoßbelastungen in Kombination mit der elastischen Blasfolie sind.

Beispiele geeigneter Faserrohstoffe sind synthetische Filamente (Fäden oder Bändchen) aus Polymerisaten, wie Polyethylen, Polypropylen sowie deren Mischungen, Polyvinylchlorid, Polyvinylidendichlorid oder Polyacrylnitril, Polykondensate, wie Polyamid, auch Aramid, oder Polyester. Ebenfalls einsetzbar sind halbsynthetische Fasern, wie Baumwolle, Zellwolle, Wolle oder Seide sowie Mischfasern.

Bevorzugt werden die hervorragend feuchtigkeitsbeständigen, synthetischen, thermoplastischen Fasern Polyamid, Polyester oder Polyethylen verwendet. Diese überstehen halbjährige Freibewitterungszeiten zwar im allgemeinen ausreichend, können aber im Bedarfsfall zusätzlich UV-stabilisiert werden, entweder durch Einarbeiten des Stabilisators in die Fasern oder durch Behandlung der Maschenware mit einer lichtschützenden Imprägnierung. Geeignete Lichtschutzmittel sind in der gleichen Quelle aufgeführt wie bei der Frage der Stabilisierung der Folie.

Um die Maschenware mit der Trägerfolie zu verbinden, lassen sich lösungsmittelfreie, insbesondere reaktive Kaschierkleber verwenden, wie aromatische oder bevorzugt aliphatische Polyurethankleber. Ebenfalls geeignet sind alle gängigen Heißschmelz-, Dispersions- oder Lösungsmittelkleber, sofern sie die geforderte Witterungsbeständigkeit aufweisen, zum Beispiel Polyacrylate, Polyethylenvinylacetat oder epoxidhärtende Systeme.

Die Trägerfolie läßt sich je nach Material auch ohne Kleber mit der Maschenware durch Heißkaschieren verbinden. Im Falle der Flachfolienextrusion von Polyolefinen geringer Dichte kann man die Folie auch auf die Maschenware extrudieren und so schmelzend verbinden.

Geeignete Füllstoffe und Pigmente sind beispielsweise Ruß, Titandioxid, Calciumcarbonat, Zinkcarbonat, Zinkoxid, Silicate oder Kieselsäure.

Die Kombination aus flexibler Maschenware und Folie mit geringem Zug-Elastizitätsmodul bewirkt eine exzellente Resistenz gegen Reib- und leichte Stoßbelastungen, die die eines Gewebes mit ähnlichem Flächengewicht übersteigt. Das Verbundmaterial weist eine hohe Dichtigkeit gegen flüssige Stoffe und deren lackschädliche Einwirkungen auf.

Im folgenden soll die Erfindung anhand von Beispielen erläutert werden, ohne diese damit allerdings einschränken zu wollen.

### Beispiele:

### Beispiel 1

Eine 50 µm dicke Blasfolie aus 84,7 Gewichtsteilen eines mit Metallocen-Katalysatoren hergestellten Copolymers aus Ethylen und Octen mit einer Dichte von 0,902 g/cm³ (PE-VLD), einem Zug-E-Modul von 55 N/mm², einer Schmelzfließrate von 190°C/2,16 kg (ISO 1133) von 1g/10 min, bei der der zu extrudierenden Masse 5 Gewichtsteile Titandioxid, 10 Gewichtsteile Kreide und 0,3 Gewichtsteile Lichtschutzmittel Tinuvin 770 (Ciba-Geigy) zugesetzt waren, wurde mittels eines lösemittelfreien Kaschierklebers auf Polyurethan-Basis (Hersteller: HENKEL, Düsseldorf) mit einer Maschenware aus Polyamid 6/6.6 mit einer Maschenzahl von 10 Maschen/cm in Maschinenlaufrichtung und 14 Maschenreihen in Querrichtung mit einem Flächengewicht von 40g/cm² kaschiert.

### Beispiel 2

Das Verbundmaterial entspricht demjenigen aus Beispiel 1, allerdings wurde in Abweichung davon eine 70 µm dicke Dreischichtblasfolie aus zwei 10 µm dicken Außenschichten und einer 50 µm dicken Innenschicht verwendet. Die Außenschichten bestanden aus 84,7 Gewichtsteilen eines mit Metallocen-Katalysatoren hergestellten Copolymerisates aus Ethylen und Octen der Dichte 0,890 mit einem Zug-E-Modul von 40 N/mm². Die Schmelzfließrate 190°C/2,16kg betrug 1g/10min. Es wurden 5 Gewichtsteile Titandioxid und 10 Gewichtsteile Kreide sowie 0,3 Gewichtsteile Lichtschutzmittel Tinuvin 770 (Ciba-Geigy) zugesetzt. Die Innenschicht bestand aus 99,7 Gewichtsteilen Polypropylen-Copolymer mit anderen Olefinen mit einer Dichte von 0,890 g/cm³ und einer Schmelzfließrate von 230°C /2,16 kg (ISO 1133) von 0,6 g/10 min und einem Zug-E-Modul von 80 N/mm².

### Beispiel 3

Ein Folien/Maschenware-Laminat wie im Beispiel 1 beschrieben wurde nach dem Kaschieren mit einer Nadelwalze mit 15 konischen Nadeln/cm². Der Durchmesser der Löcher wurde durch die Eindringtiefe der Nadeln auf 1 mm eingestellt.

### Beispiel 4

Bei einem Verbundmaterial analog zu Beispiel 1 wurde in Abweichung davon eine Maschenware aus Polyamid 6/6.6 mit einem Flächengewicht von 60 g/m² mit einer Maschenzahl von 14 Maschen/cm in Maschinenlaufrichtung verwendet. Die Kettenwirkware der hier verwendeten Art hatte darüber hinaus 14 Maschenreihen/cm in Querrichtung zur Maschinenlaufrichtung.

### Vergleichsbeispiel 1

Das Verbundmaterial entspricht demjenigen aus Beispiel 1, allerdings in Abweichung davon wurde statt der dort genannten Folie eine HDPE-Folie von 50µm Dicke mit einer Dichte von 0,963 g/cm³ und einer Schmelzfließrate 190°C/2,16 kg (ISO 1133) und 0,2g/10min und mit einem Zug-E-Modul von 800 N/mm² verwendet.

### Vergleichsbeispiel 2

Das Verbundmaterial entspricht demjenigen aus Beispiel 1, allerdings in Abweichung davon wurde keine Maschenware zu der Basisfolie zukaschiert.

### Prüfkriterien

Es wurden drei anwendungstechnisch besonders relevante Kriterien für einen Verbundmaterial für Kraftfahrzeug-Kunststoffbauteile zur vergleichenden Beurteilung der Beispielmuster herangezogen:
(1) Faltigtigkeit
(2) Durchriebfestigkeit
(3) Schutz des Kunststoffteils gegen Chemikalien am Beispiel von Batteriesäure

Als Testhaftgrund wurden lackierte Stoßfänger ausgewählt, auf dessen Eckpartien, die besonders stark dreidimensional gekrümmt sind, Muster der selbstklebenden Verbundmaterial von 30 cm Länge und 15 cm Höhe verklebt wurden.

### Durchführung der Tests

### 1. Faltigkeit

Bei der Aufbringung wurde versucht, den Prüfling möglichst faltenarm auf die dreidimensionale Stoßfängerecke zu positionieren. Das Ausmaß der Faltigkeit wurde mit folgendem Schema beurteilt:
0 = faltenfrei
1 = vereinzelte Falten
2 = einige Falten
3 = zahlreiche Falten

Die Faltigkeit ist ein Maß für die zu erwartenden Beeinträchtigung des Lackes unter den Hohlstellen durch mögliche Wassereinlagerung bei Feuchtigkeit und sichtbare Abdrücke durch Randwinkeleffekte.

### 2. Durchriebfestigkeit

Der Prüfling wurde auf einer Metallplatte befestigt und in einem Abriebtestgerät mit einem runden Prüfdorn, der mit 3 kg beschwert war, solange mit einer Frequenz von 1 Hz beansprucht, bis der Dorn Kontakt zur Metallplatte bekam.

Beurteilungsschema:
0 = mehr als 400 Hübe
1 = 250 bis 400 Hübe
2 = 100 bis 200 Hübe
3 = unter 100 Hübe

### 3. Chemikalienbeständigkeit

Auf einen Prüfling mit darunter liegender Lackschicht wurde mit einer Pipette 1 ml Batteriesäure geträufelt. Dann wurden Prüfling und Lackschicht sofort über 30 min bei 80°C gelagert. Anschließend wurde der Prüfling entfernt und der darunter liegende Lack auf Beeinträchtigungen geprüft.

Als Bewertungsschema für den Grad der Beeinträchtigung gilt:
0 = nicht sichtbar
1 = kaum sichtbar
2 = schwach sichtbar
3 = deutlich sichtbar

### Ergebnisübersicht

Eine geringe Gesamtpunktzahl (Spalte Σ) bedeutet ein gutes anwendungstechnisches Gesamturteil.

| | Faltigkeit auf 3D Oberfläche | Durchriebfestigkeit | Chemikalienbeständigkeit | Σ |
|---|---|---|---|---|
| Bsp.1 | 0 | 0 | 0 | 0 |
| Bsp.2 | 0 | 0 | 0 | 0 |
| Bsp.3 | 0 | 0 | 1 | 1 |
| Bsp.4 | 0 | 0 | 0 | 0 |
| Vergl.Bsp.1 | 3 | 0 | 0 | 3 |
| Vergl.Bsp.2 | 0 | 3 | 0 | 3 |

Die Auswertung zeigt deutlich, daß mit dem erfindungsgemäßen Produktaufbau exzellente Ergebnisse bei den entscheidenden anwendungstechnischen Tests erzielt werden.

Im Gegensatz zu den Vergleichsbeispielen handelt es sich bei den Beispielen um lackverträgliche, anschmiegsame, flüssigkeitsdichte und außerordentlich abriebfeste Verbundmaterialien, die daher gut geeignet sind für den zuverlässigen Schutz und Werterhalt lackierter Kunststoffbauteile für Automobile und andere Gegenstände.

## Patentansprüche

1. Bahnförmiges Verbundmaterial zum Schützen von zweiund/oder dreidimensionalen Gebilden gegen Schock und Abrieb,
mit folgenden Eigenschaften:
- das Material besteht aus wenigstens zwei miteinander verbundenen Schichten,
- nämlich einer flexiblen Trägerfolie aus Kunststoff und
- einer außen auf diese Trägerfolie aufkaschierten, im wesentlichen ganzflächig mit dieser verbundenen Schicht aus einer textilen, verformbaren Maschenware.

2. Bahnförmiges Verbundmaterial nach Anspruch 1, **dadurch gekennzeichnet, daß** die Trägerfolie einen Elastizitätsmodul von kleiner als 300 N/mm², vorzugsweise kleiner als 150 N/mm² aufweist.

3. Bahnförmiges Verbundmaterial nach Anspruch 1 oder 2, **dadurch gekennzeichnet, daß** die Trägerfolie eine Dicke von 10 bis 150 µm, vorzugsweise 40 bis 100 µm aufweist.

4. Bahnförmiges Verbundmaterial nach den Ansprüchen 1 bis 3, **dadurch gekennzeichnet, daß** die Trägerfolie aus Polyolefinen, Polyolefinmischungen, Polyurethan und/oder Weich-PVC besteht.

5. Bahnförmiges Verbundmaterial nach den Ansprüchen 1 bis 4, **dadurch gekennzeichnet, daß** die Trägerfolie mehr als 0,15 Gew.-%, vorzugsweise mehr als 0,3 Gew.-%, eines Lichtschutzstabilisators enthält.

6. Bahnförmiges Verbundmaterial nach den Ansprüchen 1 bis 5, **dadurch gekennzeichnet, daß** die Trägerfolie perforiert und/oder geschäumt ist.

7. Bahnförmiges Verbundmaterial nach einem der vorhergehenden Ansprüche, **dadurch gekennzeichnet, daß** die Maschenware eine Kulier-, Strick-, oder Wirkware ist.

8. Bahnförmiges Verbundmaterial nach Anspruch 1 und 7, **dadurch gekennzeichnet, dass** die Maschenware eine Flächenmasse von 10 bis 200 g/m², bevorzugt von 20 bis 80 g/m² aufweist.

9. Bahnförmiges Verbundmaterial nach Anspruch 1, 7 und 8, **dadurch gekennzeichnet, daß** die Maschenware aus Polyamid-, Polyester- oder Polyethylen-Filamenten (Fäden oder Bändchen) besteht.

10. Bahnförmiges Verbundmaterial nach Anspruch 1, 7 bis 9, **dadurch gekennzeichnet, daß** die Maschenware einlagig ist.

11. Bahnförmiges Verbundmaterial nach einem der vorhergehenden Ansprüche 7 bis 10, **dadurch gekennzeichnet, daß** die Trägerfolie mit der Masche vermittels eines Kaschierklebers verbunden ist.

12. Bahnförmiges Verbundmaterial nach Anspruch 11, **dadurch gekennzeichnet, daß** die Trägerfolie mit der Maschenware vermittels eines reaktiven Kaschierklebers auf Basis eines Zweikomponenten-Polyurethans verbunden ist.

13. Verwendung eines bahnförmigen Materials mit folgenden Eigenschaften:
- das Material besteht aus wenigstens zwei miteinander verbundenen Schichten,
- nämlich einer flexiblen Trägerfolie aus Kunststoff und
- einer außen auf diese Trägerfolie aufkaschierten, im wesentlichen ganzflächig mit dieser verbundenen Schicht aus einer textilen, verformbaren Maschenware
zum Abdecken, Schützen und Verpacken von zwei- und/oder dreidimensionalen Gebilden, insbesondere von lackierten Autoteilen.
